# EUROPEAN PATENT APPLICATION

(11) **EP 4 450 308 A1**
(43) Date of publication of application: **23.10.2024**
(21) Application number: 24170155.6
(22) Date of filing: 15.04.2024
(51) Int. Cl.: B60K 1/00, B60L 58/27

(54) **ELECTRIC VEHICLE**

(30) Priority: 20.04.2023 IT 202300007746
(71) Applicant: FERRARI S.p.A., 41100 Modena (IT)
(72) Inventor: HARRISON, Christopher David, 41100 MODENA (IT)
(74) Representative: Studio Torta S.p.A.

(57) **Abstract**

A vehicle (1) has: at least one electric machine (4); a battery (6) provided with a container (7) and with a plurality of electrochemical cells arranged inside the container (7); a thermoregulation circuit (8) arranged inside the battery (6), configured to have a thermoregulation liquid flow within the battery (6), and having an inlet for the thermoregulation liquid in the area of a hydraulic inlet connector (10) and an outlet for the thermoregulation liquid in the area of a hydraulic outlet connector (11); and a thermoregulation system (9) configured to have the thermoregulation liquid flow in the thermoregulation circuit (8) by introducing the liquid in the hydraulic inlet connector (10) and by receiving it from the hydraulic outlet connector (11); the hydraulic inlet connector (10) has a heating element (16) for heating the thermoregulation liquid flowing through the hydraulic inlet connector (10).

## Description

### CROSS-REFERENCE TO RELATED APPLICATIONS

This patent application claims priority from Italian patent application no. 102023000007746 filed on April 20, 2023, the entire disclosure of which is incorporated herein by reference.

### TECHNICAL FIELD

The present invention relates to an electric vehicle.

### PRIOR ART

A vehicle can be provided with only one or more electric motors (and in this case the drive is exclusively electric) or can be provided with one or more electric motors in combination with a thermal engine (and in this case the drive can be exclusively electric, exclusively thermal or also hybrid).

The electric motor (or each electric motor) is mechanically connected to the drive wheels and is electrically connected to a battery through the interposition of an electronic power converter.

The battery is composed of groups of electrochemical cells (generally with a pouch structure, i.e. bag-like or with a prismatic structure) connected to one another in series (so as to increase the overall electric voltage); the groups of electrochemical cells are generally connected to one another in parallel (so as to increase the intensity of the overall electric current).

In the more modern vehicles, the battery has a flat and (relatively) thin shape so as to be integrated inside the floor. In this arrangement, the battery comprises a container having a lower wall (which constitutes the bottom of the vehicle facing the road surface) and accommodates the various groups of electrochemical cells, each of which forms a corresponding module.

In order to operate properly and prevent a rapid degradation, the electrochemical cells must be kept at a fairly constant working temperature and therefore the battery must be coupled to a thermoregulation system which is capable of cooling the electrochemical cells when there is excess heat (also during a recharging when the vehicle is stationary) and is also capable of heating the electrochemical cells when it is too cold (typically after a cold start). In fact, the temperature range within which the electrochemical cells operate in an optimal manner is between 10° and 30° (the lithium electrochemical cells in some conditions of use can reach 45°, which is anyway considered an operating limit temperature); above this range there is the risk that some components deteriorate and with the overheating above 70° the danger of fire of flammable elements such as the acids and the solvents composing the electrolytes increases, whereas below this range the electrochemical cells can undergo drops in efficiency which below zero translate into a loss of autonomy also up to 40%.

Document US2019366876 describes a heat exchanger equipped with an integrated heating element on a support surface of said heat exchanger, which can be integrated in the battery, in particular between the electrochemical cells of the battery.

Document DE102021209519 describes a thermoregulation system comprising a base body in which the circuit of the thermoregulation fluid circuit is arranged and in and/or on which a heating element is arranged.

### DESCRIPTION OF THE INVENTION

The object of the present invention is to provide an electric vehicle provided with a thermoregulation system of the battery which allows ensuring the maintenance of an optimal temperature of the electrochemical cells of the battery and, simultaneously, allows minimizing the weight and the dimensions.

According to the present invention, an electric vehicle is provided, according to what claimed in the appended claims.

The claims describe preferred embodiments of the present invention forming integral part of the present description.

### BRIEF DESCRIPTION OF THE DRAWINGS

The present invention will now be described with reference to the accompanying drawings, which illustrate a non-limiting example embodiment thereof, wherein:
- Figure 1 is a schematic plan view of a road vehicle with electric propulsion manufactured in accordance with the present invention;
- Figure 2 is a schematic view of a battery and of a relative thermoregulation system of the vehicle of Figure 1; and
- Figure 3 is a schematic view of a hydraulic inlet connector of the battery of Figure 2.

### PREFERRED EMBODIMENTS OF THE INVENTION

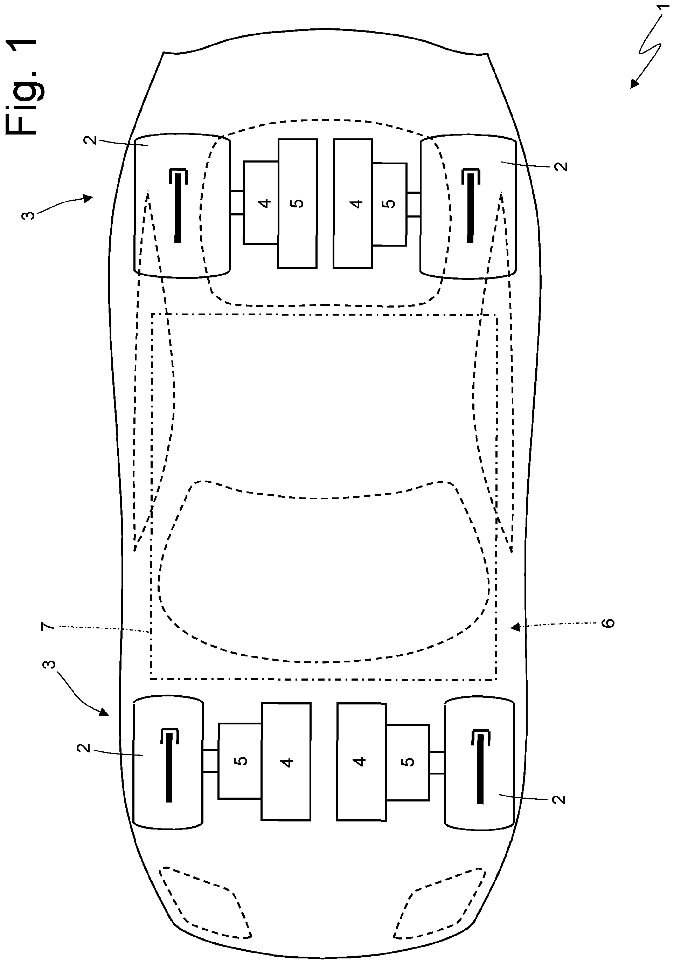

In Figure 1, reference numeral 1 indicates, as a whole, a vehicle with electric propulsion provided with four drive wheels 2 (two front drive wheels 2 and two rear drive wheels 2) .

The vehicle 1 comprises an electric powertrain system 3 which is arranged in a front position (i.e. is connected to the two front drive wheels 2), and an electric powertrain system 3 which is arranged in a rear position (i.e. is connected to the two rear drive wheels 2), is structurally totally identical to the electric powertrain system 3 arranged in the front position, and is mechanically totally independent of and separate from the electric powertrain system 3 arranged in the front position.

According to a different embodiment not illustrated, the vehicle 1 comprises one single electric powertrain system 3 (arranged in a front position or arranged in a rear position) and thus has only two drive wheels 2; in this embodiment, the vehicle 1 could alternatively also comprise a thermal powertrain system connected to the drive wheels 2 which do not receive motion from the single electric powertrain system 3.

In the embodiment illustrated in Figure 1, each electric powertrain system 3 comprises a pair of reversible electric machines 4 (i.e. which can operate both as electric motor absorbing electric energy and generating a driving mechanical torque, and as electric generator absorbing mechanical energy and generating electric energy) provided with respective shafts and a pair of transmissions 5 which connect the electric machines 4 (i.e. the shafts of the electric machines 4) to the corresponding drive wheels 2 without the interposition of any clutch.

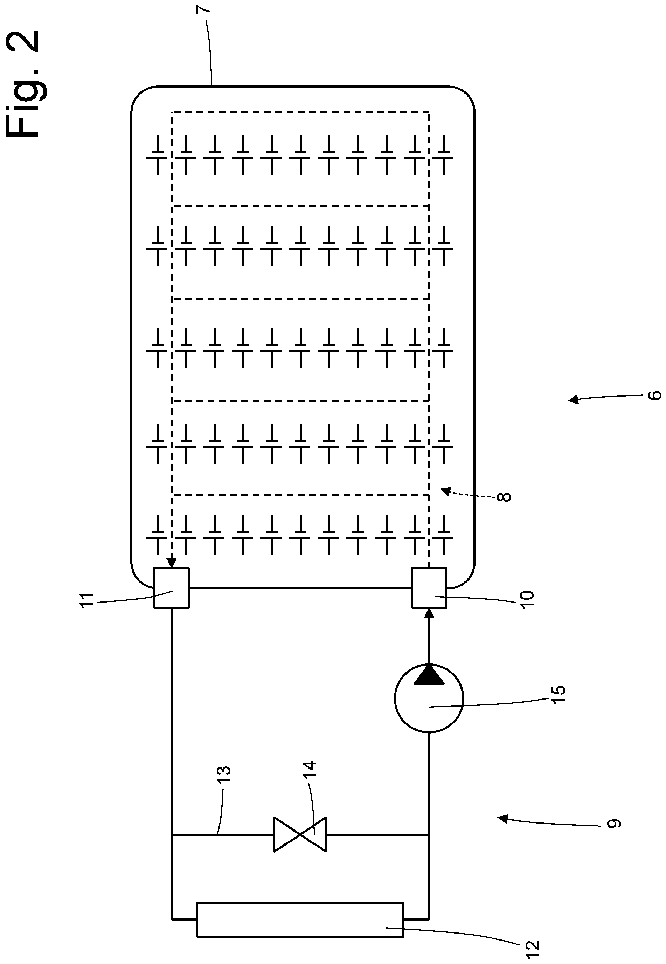

The vehicle 1 comprises a battery 6 provided with a container 7 and with a plurality of electrochemical cells (schematically illustrated in Figure 2) arranged inside the container 7.

Each electric machine 4 is controlled by a corresponding electronic AC/DC power converter (i.e. an inverter) which is connected to the chemical battery 6 which stores electric energy; namely, each electronic AC/DC power converter is bidirectional and comprises a side in direct current connected to the battery 6 and a side in three-phase alternating current which is connected to the corresponding electric machine 4.

The battery 6 has a flat and (relatively) thin shape so as to be integrated inside the floor of the vehicle 1. In particular, the battery 6 comprises the container 7 which accommodates a plurality of modules provided with respective groups of electrochemical cells with a parallelepiped shape (i.e. having a pouch or bag-like structure or a prismatic structure) or alternatively with a cylindrical shape. The container 7 has an approximately parallelepiped shape and thus comprises a horizontally oriented lower wall (which constitutes the bottom of the vehicle 1 facing the road surface), a horizontally oriented upper wall which is parallel to and opposite the lower wall, and four side walls which are vertically oriented and join the lower wall and the upper wall to each other.

According to what is illustrated in Figure 2, the vehicle 1 comprises a thermoregulation circuit 8 which is arranged inside the battery 6 and is configured to have a thermoregulation liquid (typically a mixture of water and glycol) flow within the battery 6.

In fact, in order to operate properly and prevent a rapid degradation, the electrochemical cells of the battery 6 require being kept at a fairly constant working temperature and therefore the battery 6 must be coupled to the thermoregulation circuit 8 which is to be capable of cooling the electrochemical cells of the battery 6 when there is excess heat (also during the recharging when the vehicle 1 is stationary) and is also to be capable of heating the electrochemical cells of the battery 6 when it is too cold (typically after a cold start). In fact, the temperature range within which the electrochemical cells of the battery operate in an optimal manner is between 10° and 30° (the lithium electrochemical cells in some conditions of use can reach 45°, which is anyway considered an operating limit temperature); above this range there is the risk that some components deteriorate and with the overheating above 70° the danger of fire of flammable elements such as the acids and the solvents composing the electrolytes increases, whereas below this range the electrochemical cells of the battery can undergo drops in efficiency which below zero translate into a loss of autonomy also up to 40%.

According to what is illustrated in Figure 2, the thermoregulation circuit 8 is coupled to (integrated in) the battery 6, is arranged inside the battery 6 (i.e. inside the container 7), and is configured to have the thermoregulation liquid flow within the battery 6 (i.e. inside the container 7) .

The vehicle 1 comprises a thermoregulation system 9, which is configured to have the thermoregulation liquid flow in the thermoregulation circuit 8 of the battery 6 by introducing the thermoregulation liquid in an inlet of the thermoregulation circuit 8 and by receiving (in equal quantity) the thermoregulation liquid from an outlet of the thermoregulation circuit 8. In use, the thermoregulation system 9 cools the thermoregulation liquid (if the electrochemical cells of the battery 6 are to be cooled) or heats the thermoregulation liquid (if the electrochemical cells of the battery 6 are to be heated).

The thermoregulation circuit 8 has the inlet for the thermoregulation liquid in the area of a hydraulic inlet connector 10 and the outlet for the thermoregulation liquid in the area of a hydraulic outlet connector 11.

Therefore, according to what described above, the thermoregulation system 9 is configured to have the thermoregulation liquid flow in the thermoregulation circuit 8 of the battery 6 by introducing the thermoregulation liquid in the hydraulic inlet connector 10 and by receiving the thermoregulation liquid from the hydraulic outlet connector 11.

In particular, the hydraulic inlet connector 10 constitutes the inlet of the thermoregulation circuit 8, i.e. the point where the thermoregulation liquid treated by the thermoregulation system 9 enters the thermoregulation circuit 8 inside the container 7 of the battery 6, and the hydraulic outlet connector 11 constitutes the outlet of the thermoregulation circuit 8, i.e. the point where the thermoregulation liquid exits the thermoregulation circuit 8 outside the container 7 of the battery 6 so as to return to the thermoregulation system 9. In other words, a pipe of the thermoregulation system 9 is connected to the hydraulic inlet connector 10 and similarly another pipe of the thermoregulation system 9 is connected to the hydraulic outlet connector 11.

In the (non-limiting) exemplifying embodiment illustrated in the accompanying figures, the thermoregulation system 9 comprises a radiator 12 which is utilized to cool the thermoregulation liquid, a bypass branch 13 which is connected in parallel to the radiator 12, and a bypass valve 14 which is arranged along the bypass branch 13. When the bypass valve 14 is closed, the thermoregulation liquid is forced to flow through the radiator 12, whereas when the bypass valve 14 is open, the thermoregulation liquid essentially flows through the bypass branch 13 and not through the radiator 12, as the flowing through the radiator 12 entails greater load losses. Finally, the thermoregulation system 9 comprises a pump 15 configured to have the thermoregulation liquid flow through the thermoregulation circuit 8.

According to an alternative embodiment not illustrated, the thermoregulation system 9 could also comprise a heat pump circuit which is provided (among the other things) with a compressor and with a heat exchanger which exchanges heat with the thermoregulation liquid (i.e. it can both heat and cool the thermoregulation liquid).

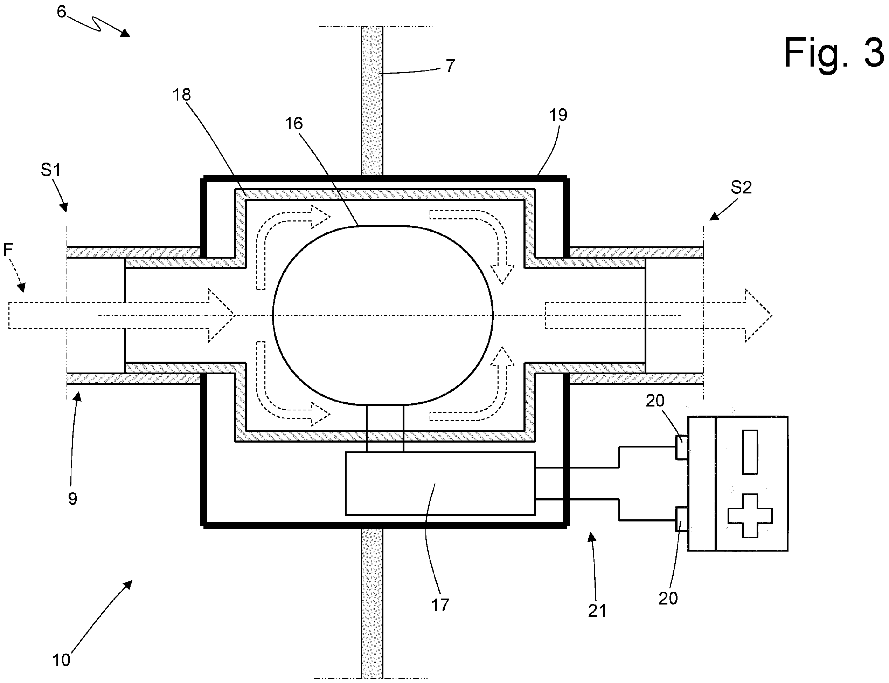

According to what is illustrated in Figure 3, the hydraulic inlet connector 10 comprises a heating element 16 configured to heat the thermoregulation liquid flowing through the hydraulic inlet connector 10, in particular while flowing through the hydraulic inlet connector 10.

Furthermore, according to what is illustrated in Figure 3, the hydraulic inlet connector 10 comprises a duct 18, through which the thermoregulation liquid flows.

Preferably, the duct 18 has a first end and a second end and the heating element 16 is interposed, particularly totally, between the first end and the second end of the duct 18. In particular, the heating element 16 is arranged (totally) inside and/or outside the duct 18.

According to what is illustrated in Figure 3, the heating element 16 is configured to heat the thermoregulation liquid while flowing through the duct 18.

In the non-limiting embodiment illustrated, the heating element 16 is arranged inside the duct 18 in direct contact with the thermoregulation liquid. In other words, the heating element 16 is licked directly by the thermoregulation liquid, which receives heat directly from the heating element 16.

According to another possible embodiment, the heating element 16 is arranged outside the duct 18 and is configured to heat a wall of the duct 18. In this manner, the heating element 16 heats the duct 18, which in turn transfers heat to the thermoregulation liquid. In order to ensure the effective transmission of the heat, the duct 18 is made of a thermally conductive material (preferably a metallic material such as aluminium). In this embodiment, the heating element 16 comprises a coil, which is wound around the duct 18 and is configured to heat a wall of the duct 18.

A control device 17 is provided configured to adjust the thermal power generated by the heating element 16. Furthermore, the hydraulic inlet connector 10 comprises a casing 19, which also accommodates the control device 17. In other embodiments, the control device 17 is outside the casing 19, preferably arranged on an outer surface of the casing 19.

The heating element 16 is electric. In other words, the heating element 16 generates heat thanks to the passage of electric current. Advantageously, the heating element 16 is connected to receive electric energy from at least part of the electrochemical cells of the battery 6 through an electric circuit 21.

According to the embodiment illustrated in Figure 3, the battery 6 comprises a positive terminal 20 and a negative terminal 20, through which the battery 6 powers the electric machines 4. The heating element 16 is electrically connected (through the electric circuit 21) to the terminals 20 of the battery 6 and therefore the heating element 16 receives electric energy from all of the electrochemical cells of the battery 6.

According to a different embodiment not illustrated, the heating element 16 receives electric energy only from a limited number of electrochemical cells, in particular from a number of electrochemical cells that is smaller than the total number of electrochemical cells of the battery 6.

Based on what is illustrated in the accompanying figures, the hydraulic inlet connector 10 is coupled to the container 7 of the battery 6 so as to enable the thermoregulation liquid to enter the thermoregulation circuit 8 arranged inside the battery 6. The hydraulic inlet connector 10 comprises the heating element 16 which heats the thermoregulation liquid flowing through the hydraulic inlet connector 10.

As already mentioned, the heating element 16 is powered by at least part of the electrochemical cells of the battery 6 through the electric circuit 21 which comprises the control system 17. According to a preferred embodiment, the control device 17 comprises a transistor, which adjusts the thermal power of the heating element 16, for example, by means of an amplitude modulation.

In the embodiment illustrated in the accompanying figures, the heating element 16 is inside the duct 18 and thus transfers heat directly to the thermoregulation liquid. According to other embodiments, the heating element 16 is arranged outside the duct 18, thus transfers heat to the duct 18, which in turn transfers heat to the thermoregulation liquid.

When the thermoregulation liquid coming from the thermoregulation system 9 enters the hydraulic inlet connector 10, i.e. passes through an inlet section S1, and the control device 17 enables the passage of current, the thermoregulation liquid is heated. Once heated, the thermoregulation liquid exits the hydraulic inlet connector 10 through an outlet section S2 and flows in the thermoregulation circuit 8 up to the hydraulic outlet connector 11. In practice, the thermoregulation liquid follows a flow F indicated by the dashed arrows in Figure 3.

The embodiments described herein can be combined with one another without departing from the scope of protection of the present invention.

The vehicle 1 described above has numerous advantages.

Firstly, the vehicle 1 described above allows ensuring the maintenance of an optimal temperature of the electrochemical cells of the battery 6, simultaneously allowing minimizing the weight and the dimensions thanks to the integration of the heating element 16 in the hydraulic inlet connector 10.

Furthermore, the vehicle 1 described above does not need a dedicated power supply system for the heating element 16, since the heating element 16 is powered directly by the electrochemical cells of the battery 6 of which it is an integral part.

Finally, the vehicle 1 described above allows reducing the time and the complexity of assembly thanks to the integration of the heating element 16 in the hydraulic inlet connector 10.

### LIST OF THE REFERENCE NUMBERS OF THE FIGURES

- 1: vehicle
- 2: wheels
- 3: powertrain system
- 4: electric machine
- 5: transmission
- 6: battery
- 7: container
- 8: thermoregulation circuit
- 9: thermoregulation system
- 10: hydraulic inlet connector
- 11: hydraulic outlet connector
- 12: radiator
- 13: bypass branch
- 14: bypass valve
- 15: pump
- 16: heating element
- 17: control device
- 18: duct
- 19: casing
- 20: terminals
- 21: electric circuit
- S1: inlet section
- S2: outlet section
- F: flow

## Claims

1. A vehicle (1) comprising:
at least one electric machine (4);
a battery (6) provided with a container (7) and with a plurality of electrochemical cells arranged inside the container (7);
a thermoregulation circuit (8), which is arranged inside the battery (6), is configured to have a thermoregulation liquid flow within the battery (6) and has an inlet for the thermoregulation liquid in the area of a hydraulic inlet connector (10) and an outlet for the thermoregulation liquid in the area of a hydraulic outlet connector (11); and
a thermoregulation system (9), which is configured to have the thermoregulation liquid flow in the thermoregulation circuit (8) of the battery (6) by introducing the thermoregulation liquid in the hydraulic inlet connector (10) and by receiving the thermoregulation liquid from the hydraulic outlet connector (11);
the vehicle (1) is **characterized in that** the hydraulic inlet connector (10) comprises a heating element (16) configured to heat the thermoregulation liquid flowing through the hydraulic inlet connector (10).

2. The vehicle (1) according to claim 1, wherein the heating element (16) is configured to heat the thermoregulation liquid while the thermoregulation liquid flows through the hydraulic inlet connector (10).

3. The vehicle (1) according to claim 1 or 2, wherein:
the hydraulic inlet connector (10) comprises a duct (18), through which the thermoregulation liquid flows; and
the heating element (16) is arranged inside the duct (18) in direct contact with the thermoregulation liquid.

4. The vehicle (1) according to claim 1 or 2, wherein:
the hydraulic connector (10) comprises a duct (18), through which the thermoregulation liquid flows; and
the heating element (16) is arranged outside the duct (18) and is configured to heat a wall of the duct (18).

5. The vehicle (1) according to claim 4, wherein the heating element (16) comprises a coil, which is wound around the duct (18) and is configured to heat a wall of the duct (18) .

6. The vehicle (1) according to any one of claims 3 to 5, wherein the duct (18) has a first end and a second end and the heating element (16) is interposed between the first end and the second end of the duct (18) and is configured to heat the thermoregulation liquid while the thermoregulation liquid is inside the duct (18).

7. The vehicle (1) according to one of the claims from 1 to 6 and comprising a control device (17) configured to adjust the power of the heating element (16).

8. The vehicle (1) according to claim 7, wherein the hydraulic inlet connector (10) comprises a casing (19), which also accommodates the control device (17).

9. The vehicle (1) according to one of the claims from 1 to 8, wherein the heating element (16) is electric and is electrically connected so as to receive electric energy from at least part of the electrochemical cells of the battery (6) .

10. The vehicle (1) according to claim 9, wherein the heating element (16) receives electric energy from at least part of the electrochemical cells of the battery (8).

11. The vehicle (1) according to claim 10, wherein the heating element (16) receives electric energy only from a limited number of electrochemical cells, in particular from a number of electrochemical cells that is smaller than the total number of electrochemical cells of the battery (6).

12. The vehicle (1) according to claim 10, wherein:
the battery (6) comprises a positive terminal (20) and a negative terminal (20), through which the battery (8) powers the electric machine (4); and
the heating element (16) is electrically connected to the terminals (20) of the battery (6).

13. A hydraulic inlet connector (10) configured to be coupled to a container (7) of a battery (6) to allow a thermoregulation liquid to flow into a thermoregulation circuit (8) arranged within a battery (6);
the hydraulic inlet connector (10) is **characterized in that** it comprises a heating element (16) configured to heat the thermoregulation liquid flowing through the hydraulic inlet connector (10).
